# EUROPÄISCHE PATENTSCHRIFT

(11) **EP 1 695 896 B1**
(45) Veröffentlichungstag und Bekanntmachung des Hinweises auf die Patenterteilung: **12.08.2009**
(21) Anmeldenummer: 06001151.7
(22) Anmeldetag: 19.01.2006
(51) Int. Cl.: B62D 61/00

(54) **Zweirädriges batteriegetriebenes Fahrzeug für eine Person**
Balancing vehicle with 2 wheels powered with a battery
Véhicule à deux roues propulsé via une batterie

(30) Priorität: 25.02.2005 DE 102005008749; 09.09.2005 DE 102005043408; 13.12.2005 DE 102005059361
(43) Veröffentlichungstag der Anmeldung: 30.08.2006
(73) Patentinhaber: Kahlert, Ulrich, 66123 Saarbrücken (DE)
(72) Erfinder: Kahlert, Ulrich, 66123 Saarbrücken (DE); Ansorge, Reinhard, 46487 Wesel (DE)
(74) Vertreter: Bernhardt, Winfrid

(56) Entgegenhaltungen:
- WO-A-03/106250
- US-A- 5 791 425
- US-B1- 6 561 294

## Beschreibung

Die Erfindung betrifft ein zweirädriges batteriegetriebenes Fahrzeug für eine auf einer Plattform des Fahrzeugs stehende und die Plattform über einen auf dieser angeordneten Aufbau in einer der Körperstellung entsprechenden Winkellage haltenden Person, bei dem ausgehend von einer die Winkellage der Plattform gegenüber der Waagerechten ermittelnden Sensoreinrichtung ein Radantrieb derart gesteuert ist, dass dieser durch Beschleunigung und Verzögerung das Fahrzeug mit der Person im Gleichgewicht hält, und bei dem eine gesondert zu betätigende Steuerung rechts-links durch unterschiedliche Antriebsgeschwindigkeiten der beiden Räder vorgesehen ist.

Aus der Patenschrift US 6,561,294 B 1 geht ein solches zweirädriges Fahrzeug hervor.

Der Oberbegriff des Anspruchs 1 besteht aus Merkmalen von der Patentschrift US 6,561,294 B1.

Die Plattform dieses bekannten Fahrzeugs hat die Gestalt eines flachen Kastens, in dem die Batterie, die Sensoren und die Steuerung angeordnet sind. Die Standfläche liegt in der bequemen Höhe einer üblichen Stufe. Für die Person sind ein Sitz und an dem genannten Aufbau ein Handgriff vorgesehen. Die Steuerung der Geschwindigkeit ergibt sich aus der besonderen Art der Gleichgewichtssteuerung: Je mehr sich die Person zusammen mit der die Handgriffe tragenden Säule nach vorne neigt, umso schneller bewegt sich das Fahrzeug voran. Umgekehrt fährt das Fahrzeug rückwärts. Im Stillstand wird das Gleichgewicht statt durch Beschleunigung und Verzögerung durch Beschleunigung und Gegenbeschleunigung gehalten; das Fahrzeug fährt in kleinen Sekundenbruchteilen ständig vor und zurück. Durch Verlagerung des Körpergewichts und damit des Schwerpunktes zur Seite wird das Fahrzeug gelenkt.

Ferner geht aus der Patentschrift US 5,791,425 ein weiteres nach dem oben beschriebenen Prinzip beschleunigtes Fahrzeug hervor. Die Steuerung erfolgt mit einem Joystick oder einer anderen Richtungskontrolle.

Der Erfindung liegt die Aufgabe zugrunde, eine weitere Nutzbarkeit des Fahrzeuges zu erschließen.

Gemäß der Erfindung wird dieser Zweck dadurch erfüllt, dass der genannte Aufbau eine Schale zur Anlage an mindestens einem Bein der Person aufweist, um die Plattform in der genannten Winkellage zu halten.
Die Steuerung rechts-links kann fußbetätigt sein. Sie könnte aber auch auf mancherlei andere Weise bewerkstelligt werden, beispielsweise durch leichtes Verschwenken des Aufbaues nach der Seite mittels der Beine oder mit Hilfe am Kopf angebrachter Neigungssensoren und Neigen des Kopfes nach der betreffenden Seite.

Bei der erfindungsgemäßen Ausgestaltung des Fahrzeugs hat die das Fahrzeug benutzende Person also Arme und Hände frei. Sie kann zeigen, gestikulieren, Handhabungen ausführen, Gegenstände tragen usw..
Die Einsatzmöglichkeiten sind vielfältig. Sie reichen von Freizeitvergnügen über performance-art-Vorführungen bis zum ernsthaften Personentransport z.B. auf Werksgeländen und in Produktionshallen.

In einer vorteilhaften Ausgestaltung liegt der Aufbau, der vorzugsweise geringfügig bis über das Knie reicht, mit einer gebogenen und/oder gewinkelten Schale, vorzugsweise von innen, an dem einen Bein an. Zusätzlich kann er eine flachere Anlage für das andere Bein aufweisen, derart, dass die Person mit diesem anderen Bein die Schale an das genannte eine Bein andrücken kann.
So ist die Neigungseinstellung der Plattform entsprechend der Körperstellung, auf der das Funktionsprinzip des Fahrzeugs beruht, unter allen Umstanden sichergestellt.

Die Anordnungen können und sollten so getroffen werden, dass über den seitlichen Bereichen der Plattform beiderseits des Aufbaues Platz für die Beine zum Verlassen der Plattform auch nach vorne vorhanden ist.
Damit kann nach der Ankunft an einem Ziel ggf. eine restliche Fortbewegung zu Fuß verkürzt werden.1n einer etwaigen Gefahrensituation kann man auch nach vorne von dem Fahrzeug abspringen.
Das Aufsteigen auf das Fahrzeug geschieht in üblicher Weise von hinten.

Eine zweckmäßige Ausgestaltung der Erfindung kennzeichnet sich durch ein zur Anlage an dem Bein eingerichtetes Austauschteil, das an der Basissäule eines handelsüblichen gattungsgemäßen Fahrzeugs ansetzbar ist statt der handelsüblichen, mit Handgriffen versehenen, höhenverstellbaren Säule.

Das Austauschteil ermöglicht einen nachträglichen Umbau, aber auch eine rationelle Variation innerhalb der Produktion.

Insbesondere für nachträglichen Umbau werden für die Steuerung rechts-links zwei Pedale vorgeschlagen und die weitere Gestaltung des Austauschteils mit einer die Pedale aufweisende Wippe, die über mindestens einen von ihr nach oben ragenden Arm ein gleichfalls an dem Austauschteil angebautes elektrisches Steuerorgan für die Steuerung rechts-links betätigt, vorzugsweise ein dem Drehgriff eines handelsüblichen Aufbaues entnommenes Steuerorgan.
Weiter im einzelnen kann das Steuerorgan mit einem mit dem Arm zusammenwirkenden Mitnehmer versehen werden, vorzugsweise einem an einer Drehscheibe angebrachten Stift, der in einem Langloch oder einer Gabelung des Armes gefasst ist.

Wird das Fahrzeug von vornherein in der erfindungsgemäßen Variante produziert, so wird man die Steuerung rechts-links eher in anderer Weise ausführen, beispielsweise mittels Druckschaltern oder mittels Sensoren in der Plattform, die auf Gewichtsverlagerung von einem Fuß auf den anderen reagieren.

Schließlich ist nach einer vorteilhaften Weiterbildung der Erfindung eine, vorzugsweise bügelförmige, Stütze für einen mitzuführenden Gegenstand vorgesehen, die nach vorne und hinten schwenkbar an dem Fahrzeug angebracht ist, vorzugsweise auf oder nahe der Radachse, und die mit dem Körper zu verbinden ist, vorzugsweise durch einen an einer Seite um den Körper greifenden Bügel.
Die, vorzugsweise etwa bis zur Gürtelhöhe reichende, Stütze ist insbesondere als "hardmount" für eine Kamera vorgesehen.

Ein Bausatz zum Umbauen eines handelsüblichen Fahrzeugs enthält vorzugsweise das Austauschteil mit dem Ansatz und der Verlängerung, die Wippe, die Pedale einschließlich Befestigungsmitteln und den Strang, ggf. ferner die erwähnte Stütze.

Die Zeichnungen geben Ausführungsbeispiele der Erfindung wieder.
- Fig. 1: zeigt ein durch einfachen, handwerklichen Umbau aus einem handelsüblichen Fahrzeug entstandenes erfindungsgemäßes Fahrzeug in Ansicht von vorne,
- Fig. 2: zeigt das Fahrzeug in Ansicht von der Seite und

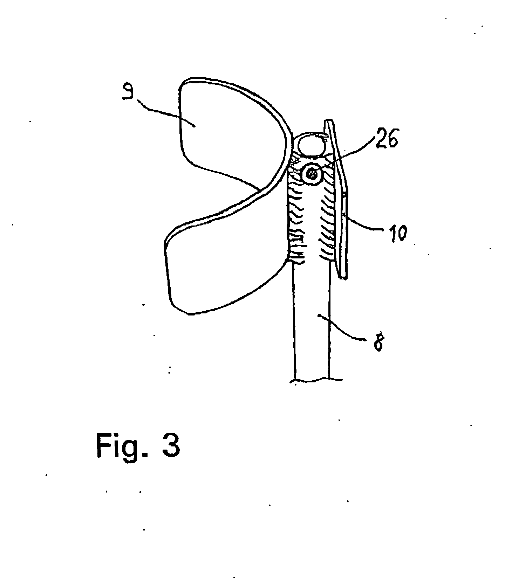

- Fig. 3: zeigt eine Einzelheit in isometrischer Darstellung von vorne und schräg von oben,
- Fig. 4: zeigt ein anderes Austauschteil als in Fig. 1 und 2 für ein sonst gleiches Fahrzeug in isometrischer Darstellung,
- Fig. 5: zeigt das Austauschteil nach Fig. 4 in gleicher Isometrie mit Darstellung der an sich verdeckten Teile,
- Fig. 6: zeigt schematisch eine Einzelheit,
- Fig. 7: zeigt eine weitere Abwandlung einer Einzelheit in isometrischer Darstellung,
- Fig. 8: zeigt ein Fahrzeug mit einem Zusatzteil in Vorderansicht,
- Fig. 9: zeigt einen Ausschnitt aus dem Fahrzeug nach Fig. 7 in Schrägansicht und
- Fig. 10: zeigt eine Draufsicht auf das Zusatzteil.

An einer als flacher Kasten ausgebildeten Plattform 1 sind zwei Räder 2 angeordnet. Sie sind durch Radmotoren 3 getrieben, die von einer in der Plattform untergebrachten Batterie gespeist sind.

Auf der Plattform 1 erhebt sich ein Aufbau 4. Er setzt sich zusammen aus einer starr mit der Plattform verbundenen Basissäule 5 und einer diese verlängernden Aluminium-Schweißkonstruktion 6.
Die letztere sitzt mit einem Stutzen 7 in der hohlen Basissäule 5. Eine an dem Stutzen 7 angeschweißte Stange 8 erstreckt sich schräg nach oben und trägt eine im Querschnitt etwa halbkreisförmige Schale 9 zur Anlage an dem einen Bein einer das Fahrzeug benutzenden Person sowie eine flache Anlage-Platte 10 für das andere Bein. Die Schale 9 und die Anlage 10 sind gepolstert zu denken.
Die beiden Flügel der Schale 9 könnten mit Gelenken versehen sein, in denen ein Flügel bei Überschreiten einer, jedoch nicht zu geringen, Kraftausübung wegklappt.

Die Aluminium-Schweißkonstruktion 6 ist als ein Austauschteil für einen Umbau konzipiert.

An einem Ansatz 11 der Stange 8 sind ein Kasten 12 zur Aufnahme von Steuerungselementen sowie eine Manschette 13 angebracht, in der ein von einem Fahrzeug nach dem Stand der Technik entnommener, die Steuerung rechts-links bewirkender Drehgriff 14 gehalten ist.

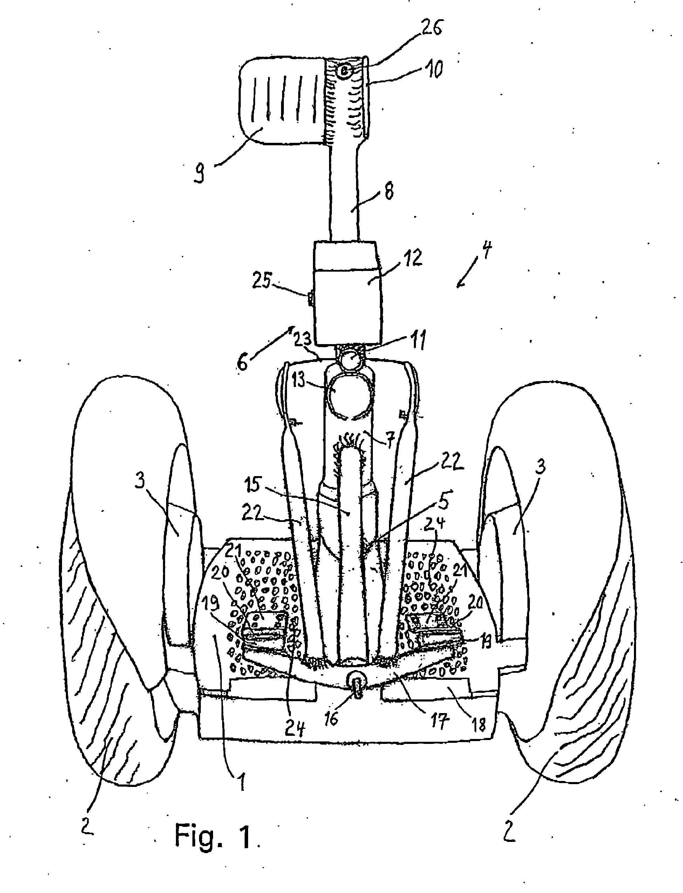

Ferner ist an dem Stutzen 7 eine neben der Basissäule 5 nach unten sich erstreckende Stange 15 angeschweißt. An dieser ist eine um eine waagerechte Achse 16 schwenkbare Wippe 17 angelenkt. Die Wippe hat Bewegungsfreiheit in einem Ausschnitt 18 der Plattform. Sie ragt dabei jedoch mit zwei auf ihr angeschweißten Platten 19 über die Oberfläche der Plattform 1.
Zwei auf dieser angebrachte Pedale 20 ragen ihrerseits über die Platten 19. Diese Pedale bestehen aus, in Fig. 1 nur von vorne sichtbaren, flachen Zungen und sind jeweils mit waagerechter Achse an einer auf der Plattform 1 angeschraubten Halteplatte 21 angelenkt.
Von der Wippe 17 aus erstrecken sich zwei an ihr angeschweißte Stangen 22 nach oben. An diesen ist ein dünnes Drahtseil 23 befestigt, das um den Drehgriff 14 geschlungen ist und auf der Mitte der Umschlingung an ihm befestigt ist.

Bei 24 sind zwei strukturierte Trittflächen für die beiden Füße angedeutet.
Schließlich ist an dem Kasten 12 ein Ein- und Ausschaltknopf 25 und am oberen Ende der Stange 8 ein Not-Ausschalter 26 zu erkennen.

Die das Fahrzeug benutzende Person stellt sich auf die beiden Trittflächen 24, wobei sie das eine Bein in die Schale 9 bringt und das andere Bein an die Anlageplatte 10 legt. Der vordere Teil der Füße liegt auf den Pedalen 20.
Neigt sich die Person nach vorne, so fährt das Fahrzeug vorwärts, und zwar umso schneller, je stärker die Neigung nach vorne ist. Neigt sich die Person nach hinten, fährt das Fahrzeug entsprechend nach hinten.

Zur Steuerung nach rechts wird mit dem einen Fuß auf das rechte Pedal gedrückt und mit dem anderen Fuß an dem linken Pedal nachgegeben. Die Wippe 17 verstellt sich und verdreht über das Drahtseil 23 den Drehgriff 14. Das linke Rad 2 dreht sich nun schneller als das rechte, so dass das Fahrzeug eine Rechtskurve beschreibt. Das Ausmaß der Verschwenkung der Wippe 17 mittels der Füße bestimmt den Kurvenradius. Abbiegen nach links geschieht entsprechend umgekehrt.

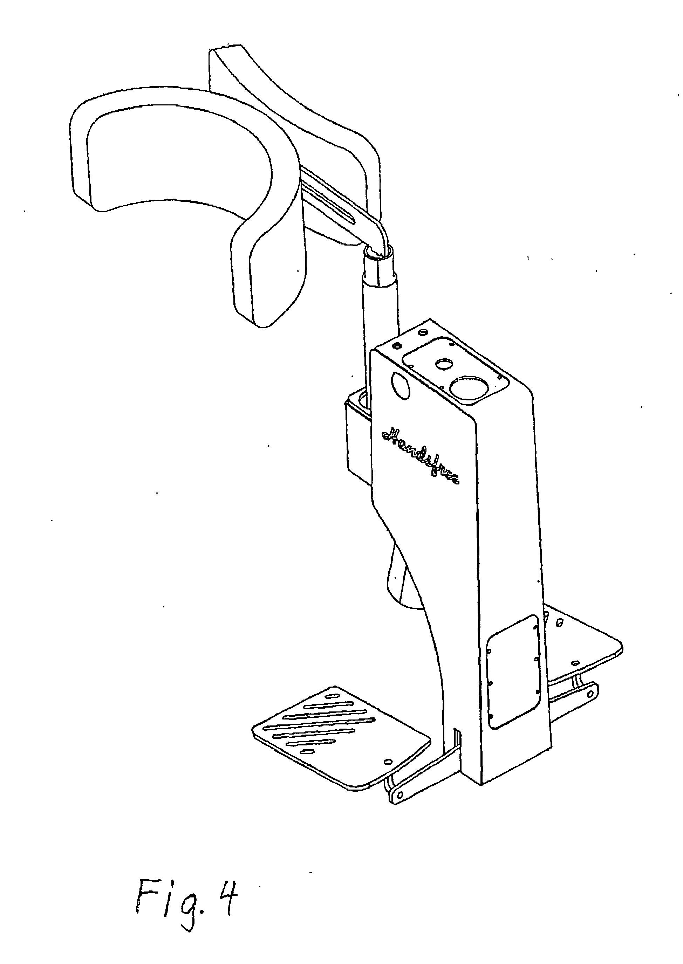

Fig. 4 zeigt ein gegenüber der Aluminium-Schweißkonstruktion 6 weiterentwickeltes Austauschteil 31.

Das Austauschteil 31 wird mit einem schräg an ihm angeordneten, dem Stutzen 7 entsprechenden Stutzen 32 an der Basissäule 5 des Fahrzeugs befestigt.

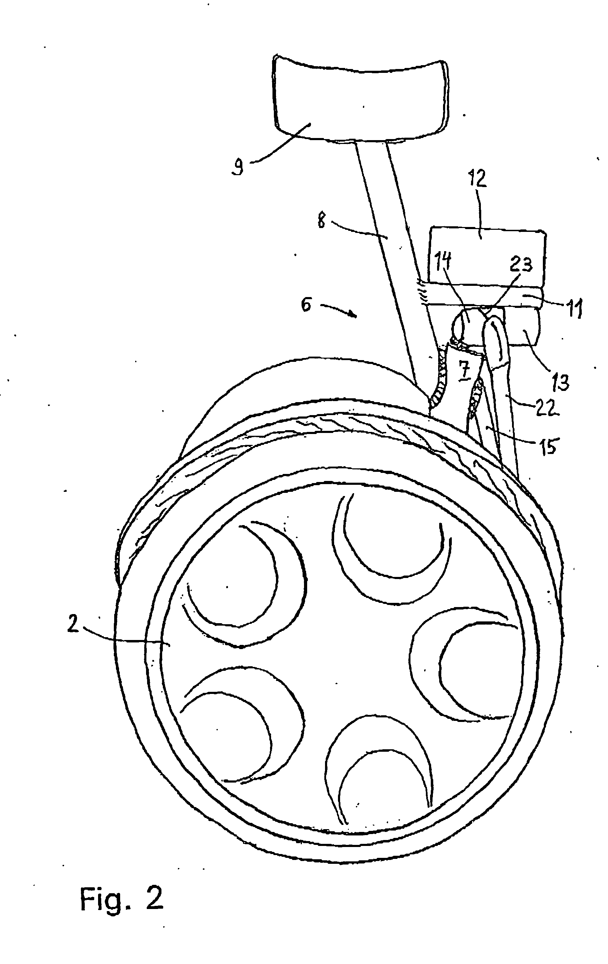

Es hat die Gestalt einer kastenförmigen Säule 33, die eine Halterung 34 für eine Schale 35 und eine Anlage-Platte 36, entsprechend 9 und 10 in Fig. 1 und 2, aufweist.

Die Säule 33 geht von einem über der Basissäule 5 liegenden breiteren Abschnitt 37 in einen vor der Basissäule 5 sich nach unten erstreckenden schmaleren Abschnitt 38 über.
Der breitere Abschnitt 37 hat einen Boden 39 und einen über diesem angeordneten Zwischenboden 40, in denen der Stutzen 32 gehalten ist.
An den Boden 39 schließt sich nach oben eine Rückwand 41 des breiteren Abschnitts 37 und nach unten eine Rückwand 42 des schmaleren Abschnitts 38 an; die Seitenwände 43 der kastenförmigen Säule stehen nach unten bzw. hinten etwas über den Boden 39 und die Rückwand 42 über und bilden einen bogenförmigen Übergang zwischen dem breiteren Abschnitt 37 und dem schmaleren Abschnitt 38. In der Decke 44 und der Vorderwand 45 der kastenförmigen Säule befindet sich jeweils ein angeschraubter, abnehmbarer Deckel 46 bzw. 47.

An der Rückwand 41 ist eine Aufnahme 48 in Form eines kleinen, nach oben offenen Kastens für die Halterung 34 angebracht:
Das untere Teil 49 einer Teleskopstange ist, was nicht im einzelnen dargestellt ist, an seinem unteren Ende in der Aufnahme 48 gelenkig gehalten und durch zwei an den beiden Seiten in der Aufnahme angeordnete Gummipuffer nach den Seiten hin abgestützt. Das obere Teil 50 der Teleskopstange ist in verschiedenen Höhenstellungen in dem unteren Teil 49 fixierbar und trägt einen Arm 51, an dem die Schale 35 und die Anlage-Platte 36 befestigt sind. Die Stellung der Schale 35 und der Anlage-Platte 36 an dem Arm 51 ist veränderbar.

An der Rückwand 42 ist in einem Gelenk 52 eine Wippe 53 gelagert. Sie erstreckt sich durch zwei Schlitze 54 in den Seitenwänden 43 aus der Säule 33 heraus und trägt an ihren Enden zwei Pedale 55. Die Pedale 55 behalten eine Lage in geringer Höhe über der Plattform des Fahrzeugs, die Wippe 53 liegt vor der Plattform.

Über der Wippe 53 ist an der Rückwand 42 das Steuerorgan 56 eines handelsüblichen Fahrzeugs angeordnet. Daran ist eine Drehscheibe 57 mit einem Stift 58 als Mitnehmer angebracht worden, auf den ein auf der Wippe 53 sich erhebender Arm 59 mit einer Gabelung 60 greift.
Durch Betätigen der Wippe 53 mittels der Pedale 55 und Übertragung der Bewegung über den Arm 59 und die Drehscheibe 57 auf das Steuerorgan 56 ist das Fahrzeug lenkbar. Diese Steuerung sowie die Steuerung der Geschwindigkeit sind oben bereits beschrieben worden.

Der Deckel 47 macht das Steuerorgan 56 zugänglich. Unter dem Deckel 46 ist die Elektronik angeordnet.

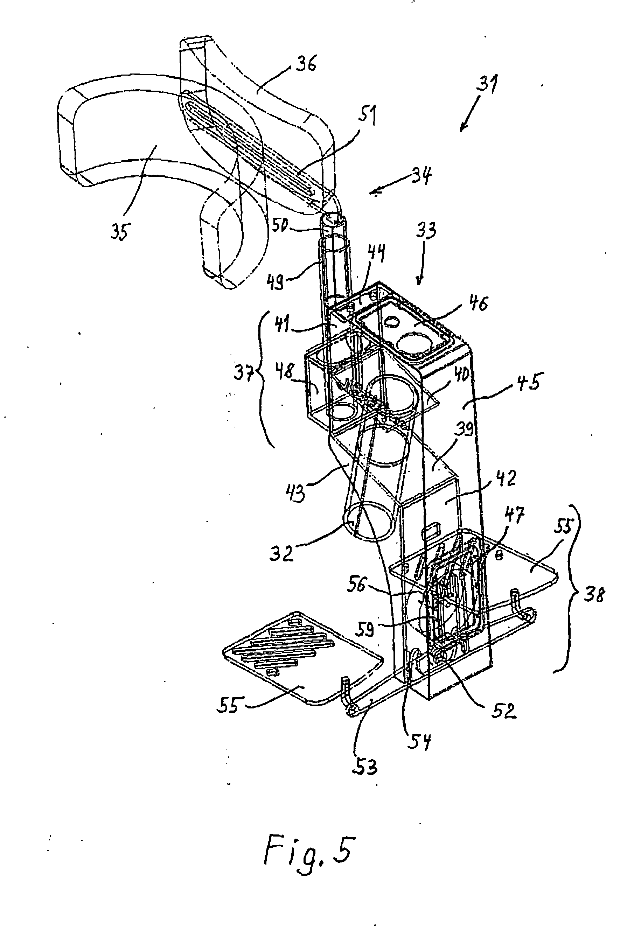

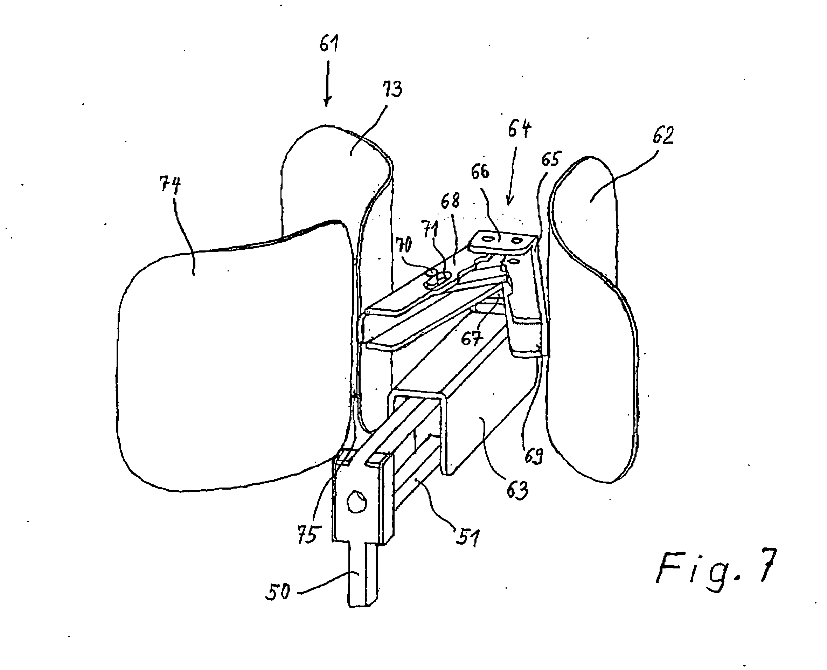

In Fig. 7 ist die Anordnung der gebogenen Schale und der flacheren Anlage, hier mit 61 bzw. 62 bezeichnet, noch einmal gegenüber Fig. 5 abgewandelt.
Auf dem Arm 51 sitzt mit einem Basisteil 63 von U-förmigem Querschnitt verschiebbar und in verschiedenen Stellungen fixierbar eine Halterung 64, die die Schale 61 und die Anlage 62 zur Anpassung an den jeweiligen Körperbau in verschiedene Abstände voneinander zu bringen erlaubt.

Am Ende des Basisteils ist eine nach oben ragende Konsole 65 angeordnet, an der zwischen einer oberen Abwinkelung 66 und einer unteren Abwinkelung 67 zwei Haltearme 68 und 69 an ihrem einen Ende gefasst und angelenkt sind. Am anderen Ende tragen die Haltearme 68 und 69 die Schale 61 und die Anlage 62.
Die Haltearme 68 und 69, wiederum von U-förmigem Querschnitt, sind durch eine an dem Haltearm 69 angelenkte und an dem Haltearm 68 mit einem Stift 70 in ein Langloch 71 greifende schräge Strebe 72 verbunden.
Durch Fixierung des Stiftes 70 an entsprechender Stelle in dem Langloch 71 lässt sich die betreffende Spreizstellung der Haltearme fixieren und somit der gewünschte Abstand zwischen der Schale 61 und der Anlage 62 einstellen.
Hierfür könnte der Stift 70 mit einem Gewinde und einer Klemmmutter versehen sein.

Die Schale 61 ist zweiteilig. Die eine Hälfte 73 ist fest an dem Haltearm 68 angebracht. Die andere Hälfte 74 ist mit der ersteren durch ein, z. B. klemmendes, Gelenk 75 verbunden.
Unter Überwindung der Klemmkraft kann so die Hälfte 74 notfalls abklappen.

Die Schale 61 und die Anlage 62 sind ohne ihre Polsterung dargestellt.

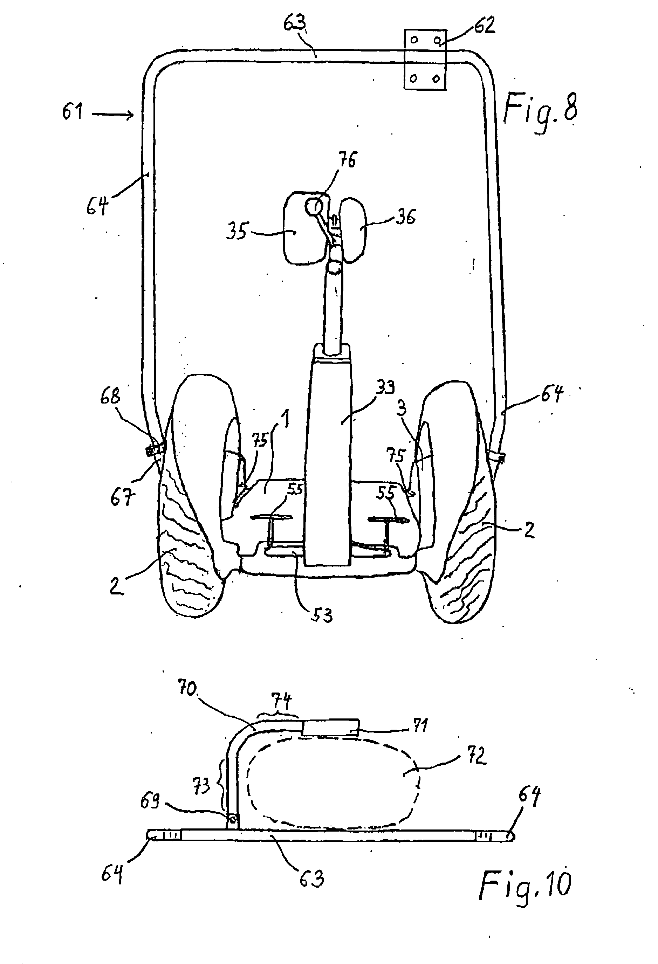

Fig. 8 zeigt ein Zusatzteil in Form einer bügelförmigen Stütze 61 für einen mitzuführenden Gegenstand. Insbesondere ist dabei gedacht an eine im übrigen am Körper getragene schwere Kamera.

Über die weiter obengenannten Anwendungsmöglichkeiten hinaus ist das erfindungsgemäße Fahrzeug besonders geeignet für Kameraleute, die sich z.B. parallel zu sich fortbewegenden Objekten bewegen wollen. Für diesen Zweck stehen bisher schon Körperstative zur Verfügung und Einrichtungen zum Ausgleich der mit dem körperlichen Laufen bei jedem Schritt verbundenen Ungleichmäßigkeiten. Das erfindungsgemäße Fahrzeug ermöglicht einem Kameramann demgegenüber eine gleichförmige Fortbewegung bei voller Handlungsfreiheit für seine Arme und Hände.

Mit der Stütze 61 wird dieser Vorteil weiter ausgebaut. Die Kamera erhält ein "hardmount", was sonst nur bei stehender Betätigung der Kamera möglich ist.

Die Kamera oder eine Haltevorrichtung der Kamera wird an einer Montageplatte 62 befestigt, die sich auf einem waagerechten Bügelabschnitt 63 verschieben und befestigen lässt.

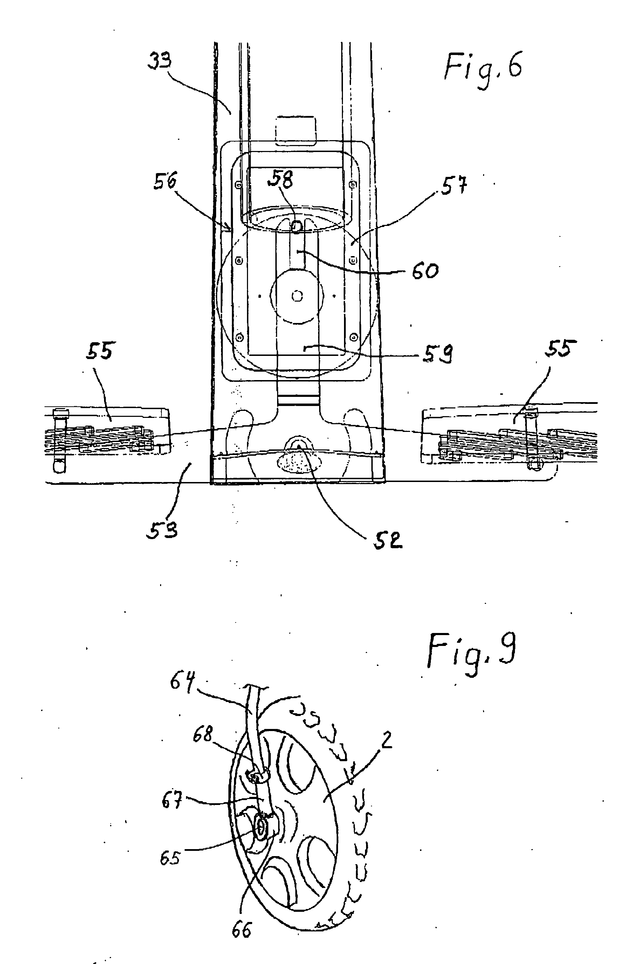

Die Stütze 61 ist mit zwei seitlichen Bügelabschnitten 64 schwenkbar auf der geometrischen Radachse angebracht. Zu diesem Zweck ist jeweils eine zentrale Befestigungsmutter entfernt worden und durch einen mit einem entsprechenden Innengewinde zugleich als Mutter dienenden Achsbolzen 65 ersetzt worden (Fig. 9). Auf dem Achsbolzen 65 sitzt unmittelbar oder über ein Kugellager eine Nabe 66, die mit einem radial angesetzten Stutzen 67 als Halterung für die Stütze 61 dient. Die Enden der bügelförmigen Stütze 61 sind in die Stutzen 67 eingesetzt und mittels einer Spannschelle 68 befestigt. Insbesondere bei etwas größerer Länge der Stutzen 67 als gezeichnet kann die Höhe der Stütze 61 teleskopisch verändert und eingestellt werden.

Wie aus Fig. 10 ersichtlich, ist an dem waagerechten Bügelabschnitt 63 der Stütze 61 über ein Klemmgelenk 69 ein gewinkelter Bügel 70 befestigt mit einer Polsterung 71 an seinem Ende.
Der Benutzer des Fahrzeuges steht, wie bei 72 gestrichelt angedeutet, in dem Zwischenraum zwischen dem waagerechten Bügelabschnitt 63 und der Polsterung 71. Er stellt sich von der Seite her in diesen Zwischenraum und/oder schwenkt den Bügel 70 unter Benutzung des Klemmgelenks 69 zurück und wieder heran.

Zur Anpassung an die Körperabmessungen kann der Bügel 70 in den durch die Klammern 73 und 74 bezeichneten Bereichen teleskopisch längenverstellbar sein.

Der waagerechte Bügelabschnitt 63 befindet sich beispielsweise in einer Höhe knapp unter der Gürtellinie.

Um die Breite der bügelförmigen Stütze 61 zu verringern, könnte man sie auch beispielsweise an den durch die Pfeile 75 bezeichneten Stellen der Radmotoren 3 oder an der Plattform 1 gelenkig befestigen. Die Befestigung auf der Radachse wird jedoch bevorzugt, da dann durch die Masse der Kamera bzw. des anderen Gegenstands kein ggf. störender Einfluss auf die Stellung der Plattform 1 ausgeübt werden kann.

Der Benutzer steuert, wie schon erwähnt, über die Schale 35 und die Säule 33 und die Stellung der mit diesen starr verbundenen Plattform 1 die Geschwindigkeit. Neigt er über die Stellung der Beine hinaus das Becken nach vorne oder hinten, so nimmt er dabei die Stütze 61 mit. Die Beschleunigung bzw. Verzögerung hält dabei der Masse der Kamera oder des anderen Gegenstands in gleicher Weise das Gleichgewicht wie der Körpermasse.
Will oder muss der Benutzer nach vorne von der Plattform absteigen, so ist das unter weiterer Mitnahme der Stütze 61 immer noch möglich.

Schließlich seien ein starr mit der Säule 33 verbundener Haltegriff 76 sowie die Möglichkeit erwähnt, an der Stütze 61, die dann eine geringere Höhe hätte, einen Sattel o. dgl. für den Benutzer anzubringen.

## Patentansprüche

1. Zweirädriges batteriegetriebenes Fahrzeug für eine auf einer Plattform (1) des Fahrzeugs stehende und die Plattform (1) über einen auf dieser angeordneten Aufbau (4) in einer der Körperstellung entsprechenden Winkellage haltende Person, bei dem ausgehend von einer die Winkellage der Plattform (1) gegenüber der Waagerechten ermittelnden Sensoreinrichtung ein Radantrieb (3) derart gesteuert ist, dass dieser durch Beschleunigung und Verzögerung das Fahrzeug mit der Person im Gleichgewicht hält ("Segway"), und bei dem eine gesondert zu betätigende Steuerung (14,17-23 bzw. 52-60) rechts-links durch unterschiedliche Antriebsgeschwindigkeiten der beiden Räder (2) vorgesehen ist,
**dadurch gekennzeichnet,**
**dass** der genannte Aufbau (4) eine Schale (9 bzw. 35 bzw. 61) zur Anlage an mindestens einem Bein der Person aufweist, um die Plattform (1) in der genannten Winkellage zu halten.

2. Fahrzeug nach Anspruch 1,
**dadurch gekennzeichnet,**
**dass** der Aufbau (4) bis über das Knie reicht.

3. Fahrzeug nach Anspruch 1 oder 2,
**dadurch gekennzeichnet,**
**dass** die Schale (9 bzw. 35 bzw. 61) zur Anlage an dem einen Bein, vorzugsweise von der Seite, vorzugsweise von innen, gebogen und/oder gewinkelt ist.

4. Fahrzeug nach Anspruch 3,
**dadurch gekennzeichnet,**
**dass** der Aufbau (4) eine flachere Anlage (10 bzw. 36 bzw. 62) für das andere Bein aufweist, derart, dass die Person mit diesem anderen Bein die Schale (9 bzw. 35) an das genannte eine Bein andrücken kann.

5. Fahrzeug nach einem der Ansprüche 1 bis 4,
**dadurch gekennzeichnet,**
**dass** über den seitlichen Bereichen der Plattform (1) beiderseits des Aufbaues (4) Platz für die Beine zum Verlassen der Plattform (1) auch nach vorne vorhanden ist.

6. Fahrzeug noch einem der Ansprüche 1 bis 5,
**gekennzeichnet durch** ein zur Anlage an dem Bein eingerichtetes Austauschteil (6 bzw. 31), das an der Basissäule (5) eines handelsüblichen gattungsgemäßen Fahrzeugs ansetzbar ist statt der handelsüblichen, mit Handgriffen versehenen, höhenverstellbaren Säule.

7. Fahrzeug nach Anspruch 6,
**dadurch gekennzeichnet,**
**dass** das Austauschteil (31) die Gestalt einer kastenförmigen Säule (33) hat, die eine, vorzugsweise höhenverstellbare, Halterung (34) für die genannte Schale (35) und ggf. die flachere Anlage (36) aufweist und mit einem schräg in ihr angeordneten Stutzen (32) an die genannte Basissäule (5) ansetzbar ist.

8. Fahrzeug nach einem der Ansprüche 4 bis 7,
**dadurch gekennzeichnet,**
**dass** die Schale (61) und die flachere Anlage (62) einen veränderbaren Abstand voneinander aufweisen, vorzugsweise durch Anordnung an zwei schwenkbaren Haltearmen (68;69), die in verschiedenen Spreizstellungen fixierbar sind.

9. Fahrzeug nach einem der Ansprüche 1 bis 8,
**dadurch gekennzeichnet,**
**dass** die Steuerung (14,17-23 bzw. 52-60) rechts-links fußbetätigt (20,21 bzw. 55) ist, vorzugsweise zwei Pedale (20 bzw. 55) für die Steuerung (14,17-23 bzw. 52-60) rechts-links vorgesehen sind.

10. Fahrzeug nach Anspruch 6 und 9,
**dadurch gekennzeichnet,**
**dass** an dem Austauschteil (6 bzw. 31) eine die Pedale (20 bzw. 55) aufweisende Wippe (17 bzw. 53) angebaut ist, die über mindestens einen von ihr nach oben ragenden Arm (22 bzw. 51) ein gleichfalls an dem Austauschteil (6 bzw. 31) angebautes elektrisches Steuerorgan (14 bzw. 56) für die Steuerung rechts-links betätigt, vorzugsweise ein dem Drehgriff eines handelsüblichen Aufbaues entnommenes Steuerorgan (14 bzw. 56).

11. Fahrzeug nach den Ansprüchen 6, 9 und 10,
**dadurch gekennzeichnet,**
**dass** das Austauschteil (6 bzw. 31) mit einer neben der Basissäule (5) sich erstreckenden Verlängerung nach unten (15 bzw. 38) versehen ist, an der die Wippe (17 bzw. 53) angebracht ist.

12. Fahrzeug nach einem der Ansprüche 1 bis 11,
**gekennzeichnet durch** eine, vorzugsweise bügelförmige, Stütze (61) für einen mitzuführenden Gegenstand, die nach vorne und hinten schwenkbar an dem Fahrzeug angebracht ist, vorzugsweise auf oder nahe der Radachse (65), und die mit dem Körper (72) zu verbinden ist, vorzugsweise **durch** einen an einer Seite um den Körper (72) greifenden Bügel (70).

## Claims

1. Two-wheeled, battery-powered vehicle for a person standing on a platform (1) of the vehicle and keeping the platform (1) in an angular position corresponding to the body position via a structure (4) arranged on said platform, in which, on the basis of a sensor device determining the angular position of the platform (1) in relation to the horizontal, a wheel drive (3) is controlled in such a manner that it keeps the vehicle together with the person in balance ("Segway") by means of acceleration and deceleration, and in which a right/left control (14, 17-23 or 52-60), which is to be actuated separately, is provided by means of different driving speeds of the two wheels (2), **characterized in that** the abovementioned structure (4) has a shell (9 or 35 or 61) for making contact with at least one leg of the person in order to keep the platform (1) in the abovementioned angular position.

2. Vehicle according to Claim 1, **characterized in that** the structure (4) reaches over the knee.

3. Vehicle according to Claim 1 or 2, **characterized in that** the shell (9 or 35 or 61) is bent and/or angled, preferably from the side, preferably from the inside, in order to make contact with the one leg.

4. Vehicle according to Claim 3, **characterized in that** the structure (4) has a flatter contact means (10 or 36 or 62) for the other leg in such a manner that, with said other leg, the person can press the shell (9 or 35) against the first leg mentioned.

5. Vehicle according to one of Claims 1 to 4, **characterized in that** space for the legs for leaving the platform (1) via the lateral regions of the platform (1) on both sides of the structure (4) is also present to the front.

6. Vehicle according to one of Claims 1 to 5, **characterized by** an interchangeable part (6 or 31) which is provided for making contact with the leg and can be fitted to the base column (5) of a commercially available vehicle of the type in question instead of the commercially available, height-adjustable column provided with handles.

7. Vehicle according to Claim 6, **characterized in that** the interchangeable part (31) is in the form of a box-shaped column (33) which has a preferably height-adjustable holder (34) for the abovementioned shell (35) and, if appropriate, for the flatter contact means (36), and can be fitted by means of a connecting piece (32) arranged obliquely therein onto the abovementioned base column (5).

8. Vehicle according to one of Claims 4 to 7, **characterized in that** the shell (61) and the flatter contact means (62) are at a changeable distance from each other, preferably by means of arrangement on two pivotable holding arms (68; 69) which can be fixed in different spread-apart positions.

9. Vehicle according to one of Claims 1 to 8, **characterized in that** the right/left control (14, 17-23 or 52-60) is foot-actuated (20, 21 or 55), and preferably two pedals (20 or 55) are provided for the right/left control (14, 17-23 or 52-60).

10. Vehicle according to Claims 6 and 9, **characterized in that** a rocker (17 or 53) which has the pedals (20 or 55) is mounted on the interchangeable part (6 and 31), said rocker, via at least one arm (22 or 51) protruding upwards therefrom, actuating an electric control member (14 or 56), which is likewise mounted on the interchangeable part (6 or 31), for the right/left control, preferably a control member (14 or 56) taken from the rotary handle of a commercially available structure.

11. Vehicle according to Claims 6, 9 and 10, **characterized in that** the interchangeable part (6 or 31) is provided with an extension (15 and 38) which extends downwards next to the base column (5) and to which the rocker (17 or 53) is attached.

12. Vehicle according to one of Claims 1 to 11, **characterized by** a preferably bow-shaped support (61) for an object which is to be taken along, which support is attached to the vehicle in a manner such that it can pivot to the front and rear, preferably on or in the vicinity of the wheel axle (65), and can be connected to the body (72), preferably by means of a bow (70) reaching around the body (72) on one side.

## Revendications

1. Véhicule à deux roues propulsé par une batterie pour une personne debout sur une plate-forme (1) du véhicule, la plate-forme (1) maintenant ladite personne via une structure (4) agencée sur celle-ci, dans une position angulaire correspondant à la position corporelle, dans lequel un entraînement de roue (3) est commandé, au moyen d'un système capteur qui détermine la position angulaire de la plate-forme (1) par rapport à l'horizontale de telle manière que cet entraînement maintient, par accélération et décélération du véhicule, le véhicule avec la personne en équilibre ("Segway"), et dans lequel est prévue une commande à actionnement spécifique (14, 17-23 ou 52-60) à droite et à gauche des deux roues (2) au moyen de vitesses d'entraînement différentes,
**caractérisé en ce que**
ladite structure (4) comprend une coque (9 ou 35 ou 61) destinée à venir en appui contre au moins une jambe de la personne, afin de maintenir la plate-forme (1) dans la position angulaire précitée.

2. Véhicule selon la revendication 1,
**caractérisé en ce que** la structure (4) s'étend jusqu'au-dessus du genou.

3. Véhicule selon la revendication 1 ou 2,
**caractérisé en ce que** la coque (9 ou 35 ou 61) est cintrée et/ou coudée, de préférence depuis le côté et de préférence depuis l'intérieur, pour venir en contact contre ladite jambe.

4. Véhicule selon la revendication 3,
**caractérisé en ce que** la structure (4) présente un appui à plat (10 ou 36 ou 62) pour l'autre jambe, de telle sorte que la personne peut presser au moyen de cette autre jambe la coque (9 ou 35) contre la première jambe précitée.

5. Véhicule selon l'une des revendications 1 à 4,
**caractérisé en ce qu'**il existe de la place, via les zones latérales de la plate-forme (1) des deux côtés de la structure (4), pour les jambes afin de quitter la plate-forme (1), également vers l'avant.

6. Véhicule selon l'une des revendications 1 à 5,
**caractérisé par** une pièce interchangeable (6 ou 31) conçue pour venir en contact avec la jambe, qui peut être posée contre la colonne de base (5) d'un véhicule de ce type générique habituel dans le commerce à la place de la colonne réglable en hauteur habituelle dans le commerce pourvue de poignées.

7. Véhicule selon la revendication 6,
**caractérisé en ce que** la pièce interchangeable (31) présente la conformation d'une colonne en forme de caisson (33), qui comprend une monture (34), de préférence réglable en hauteur, pour ladite coque (35) et le cas échéant pour l'appui à plat (36), et peut être accolée à ladite colonne de base (5) avec un manchon (32) agencé en oblique dans la monture.

8. Véhicule selon l'une des revendications 4 à 7,
**caractérisé en ce que** la coque (61) et l'appui à plat (62) présentent l'une par rapport à l'autre une distance variable, de préférence par agencement sur deux bras de maintien pivotants (68 ; 69), lesquels peuvent être fixés dans différentes positions en écartement.

9. Véhicule selon l'une des revendications 1 à 8,
**caractérisé en ce que** la commande (14, 17-23 ou 52-60) est actionnée au pied à droite et à gauche (20, 21 55), et **en ce qu'**il est de préférence prévu deux pédales (20 ou 55) pour la commande (14, 17-23 ou 52-60) à droite et à gauche.

10. Véhicule selon la revendication 6 et 9,
**caractérisé en ce que** sur la pièce interchangeable (6 ou 31) est montée une bascule (17 ou 53) qui présente les pédales (20 ou 55), qui actionne, via au moins un bras (22 ou 51) en saillie depuis la bascule vers le haut, un organe de commande (14 ou 56) électrique également monté sur la pièce interchangeable (6 ou 31) pour la commande droite-gauche, de préférence un organe de commande (14 ou 56) prélevé de la poignée rotative d'une structure habituelle dans le commerce.

11. Véhicule selon les revendications 6, 9 et 10,
**caractérisé en ce que** la pièce interchangeable (6 ou 31) est pourvue d'un prolongement vers le bas (15 ou 38) qui s'étend à côté de la colonne de base (5) et sur lequel est montée la bascule (17 ou 53).

12. Véhicule selon l'une des revendications 1 à 11,
**caractérisé par** un soutien (61), de préférence en forme d'arceau, pour un objet à transporter, monté sur le véhicule avec possibilité de pivotement vers l'avant et l'arrière, de préférence sur l'axe de roue (65) ou à proximité de celui-ci, et qui doit être relié avec le corps (72), de préférence au moyen d'un arceau (70) qui entoure le corps (72) sur un côté.
